## Europäisches Patentamt

## European Patent Office

## Office européen des brevets

(11) Veröffentlichungsnummer: **0 293 614 B1**

(12) **EUROPÄISCHE PATENTSCHRIFT**

(45) Veröffentlichungstag der Patentschrift: **15.07.92**

(21) Anmeldenummer: **88107047.8**

(22) Anmeldetag: **03.05.88**

(51) Int. Cl.5: **H02G 3/12**, H02B 1/04

(54) Hohlwanddose für elektrische Installationseinrichtungen, insbesondere für Schalter, Steckdosen od. dgl.

(30) Priorität: **02.06.87 DE 3718379**

(43) Veröffentlichungstag der Anmeldung:
**07.12.88 Patentblatt 88/49**

(45) Bekanntmachung des Hinweises auf die
Patenterteilung:
**15.07.92 Patentblatt 92/29**

(84) Benannte Vertragsstaaten:
**AT BE CH FR GB IT LI NL SE**

(56) Entgegenhaltungen:
**DE-A- 2 706 993      DE-A- 3 041 919**
**DE-A- 3 512 425      DE-B- 1 665 316**
**NL-A- 6 408 233      US-A- 3 662 085**

(73) Patentinhaber: **Raimund Andris GmbH & Co.
KG
Spohnplatzstrasse 5
W-7730 Villingen-Schwenningen 22(DE)**

(72) Erfinder: **Andris, Raimund
Tannhörnle 9
W-7730 Villingen-Schwenningen 22(DE)**

(74) Vertreter: **Neymeyer, Franz, Dipl.-Ing. (FH)
Haselweg 20
W-7730 Villingen 24(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Hohlwanddose aus Kunststoff für elektrische Installationseinrichtungen, insbesondere für Schalter, Steckdosen od. dgl., welche an der offenen Seite ihrer im wesentlichen zylindrischen Dosenwand einen Stützflansch und an deren Außenseite gegen den Stützflansch gerichtete Stützelemente aufweist und bei der der Dosenkörper mit wenigstens zwei Befestigungsschrauben versehen ist, welche von der offenen Dosenseite her in achsparallele Schraubenlöcher von achsparallel verlaufenden Verdickungen der Dosenwand eingeschraubt sind.

Bei einer bekannten Hohlwanddose dieser Art (DE-OS 25 26 890) sind in außenseitigen Führungsnuten der Dosenwand Spannschrauben angeordnet, deren Gewindeschäfte sich über die gesamte axiale Länge der Hohlwanddose bzw. der Führungsnuten erstrecken und deren Schraubenköpfe sich frontseitig an einer mit Durchsteckbohrungen versehenen Ringwand der Hohlwanddose abstützen. Die Gewindeschäfte der Spannschrauben sind in metallene Spannpratze eingeschraubt, die zum Einführen der Hohlwanddose in eine Aufnahmeöffnung einer Hohlwandplatte auf einem rückseitigen Außenkonus der Dosenwand versenkt aufliegen und die in dieser versenkten Schwenklage jeweils durch einen ausbiegbaren, angespritzten, sich in axialer Richtung erstreckenden Sperrfinger gegen Drehung vorübergehend gesichert sind. Beim Anziehen der Spannschrauben werden dann die Spannpratzen über den Konus gezogen und dabei unter Ausbiegung des Sperrfingers in Radiallage verschwenkt und gleichzeitig in die Führungsnut gezogen, in welcher sie dann gegen Drehung gesichert sind und die Außenkontur der Dosenwand radial nach außen überragen, so daß sie an der Rückseite der Wandplatte anliegend verspannt werden können.

Abgesehen davon, daß die Vormontage der Spannschrauben und der Spannpratzen an dem im übrigen einstückig ausgebildeten Dosenkörper zeitaufwendig ist, bedarf es zum Verspannen der Spannpratzen an der Rückseite der mehr oder weniger dicken Hohlwandplatte vieler Umdrehungen der Spannschraube, die in der Regel mittels eines Schraubendrehers von Hand ausgeführt werden müssen und deshalb nicht nur zusätzlich zeitaufwendig sind, sondern auch noch anstrengend sein können.

Bei einer anderen bekannten Hohlwanddose (DE-OS 35 12 425) sind in zwei sich diametral gegenüberliegenden axialen Führungsnuten der Dosenwand zahnstangenartige Axialverzahnungssegmente und jeweils ein mit einem radial vorspringenden Spannarm und mit einem ebenfalls zahnstangenartigen Gegenzahnsektor versehene, im wesentlichen zylindrische, schaftartige Spannglieder angeordnet, welche in einer bestimmten Winkellage axial verschiebbar sind, während sie unter gleichzeitiger Auswärtsschwenkung ihrer Spannarme mit den Axialverzahnungssektoren der Führungsnuten in Eingriff bringbar sind. Bei dieser Hohlwanddose müssen die Spannglieder nach dem Einführen der Hohlwanddose in die dafür vorgesehene Öffnung der Wandplatte durch die Wandplatte hindurch geschoben und danach verdreht werden. Dabei kann es aber vorkommen, daß die Axialverschiebung der Spannglieder um mehr als die Dicke der Wandplatte erfolgt und ein Verspannen nicht mehr möglich ist. Außerdem müssen bei dieser Hohlwanddose die Spannarme der Spannglieder relativ dünn ausgebildet sein, weil sie beim Hindurchführen durch die Öffnung der Wandplatte zumindest geringfügig elastisch verformt werden, damit ihre Axialverzahnungssektoren mit den Gegenverzahnungssektoren der Führungsnuten außer Eingriff gebracht werden können.

Bei einer anderen bekannten Hohlwanddose (NL-A-64 08 223) ist die zylindrische Dosenwand mit mehreren radial nach außen vorspringenden, zungenartigen Sperrelementen zum Hintergreifen einer Hohlwandplatte vorgesehen. Diese Sperrelemente weisen aber nur zwei unterschiedliche Abstände vom offenen Dosenrand auf, so daß nur zwei unterschiedliche Dicken von Hohlwandplatten damit erfaßt werden können. Ein Verspannen ist wegen des starr am Dosenkörper befestigten Stützflansches nicht möglich.

Eine weitere bekannte Hohlwanddose (DE-A-30 41 919) weist einerseits einen fest angeordneten Abstützflansch und andererseits durch Schrauben verstellbare Halteglieder auf, die zunächst zur Einführung der Hohlwanddose in eine Wandöffnung in parallel zur Längsachse verlaufende, am oberen Ende durch eine Schraubenstützwand verschlossene Führungsrinnen der Hohlwanddose einfügbar sind und die durch Anziehen der Schrauben an der Wandschale festlegbar sind. Dabei ist die Stützwand über eine Klemmlasche mit einer in jede Führungsrinne einsetzbare Keilmutter verbunden. Die Klemmlasche selbst ist sowohl mit der Stützwand als auch mit der Keilmutter einstückig ausgebildet und auf ihrer Außenseite mit einer sägezahnartigen Klemmfläche versehen. Weil die sich diametral gegenüberliegenden Klemmlaschen einstückig am Dosenkörper angeformt sind, läßt sich ein axiales Verspannen des Dosenkörpers an der Wandplatte durch bloßes Anziehen der Spannschrauben nur schwer erreichen. Außerdem haben die in dieser Hohlwanddose verwendeten Befestigungselemente dübelähnliche Eigenschaften.

Der Erfindung liegt die Aufgabe zugrunde, eine Hohlwanddose der eingangs genannten Art zu schaffen, deren Befestigungselemente einfacher zu handhaben sind und eine einfachere, zugleich sicherere Spannbefestigung der Hohlwanddose an der Hohlwandplatte, die unterschiedlich dick sein kann, gewährleisten.

Gelöst wird diese Aufgabe erfindungsgemäß dadurch, daß die Stützelemente aus jeweils mehreren, in axialen Reihen lamellenartig angeordneten, radial elastischen Sperrgliedern bestehen, und daß der Stützflansch axial beweglich an der Dosenwand angeordnet und durch die Befestigungsschrauben und/oder durch Federelemente in axialer Richtung gegen die Stützelemente spannbar ist.

Diese erfindungsgemäße Lösung ist gegenüber den bekannten Hohlwanddosen nicht nur hinsichtlich einer einfacheren Handhabung beim Einsetzen und Befestigen in einer Hohlwandplatte von Vorteil, sondern sie kann formtechnisch so gestaltet werden, daß außer den ohnehin benötigten Befestigungsschrauben, die bei Unterputzdosen allgemein zur Befestigung der einzusetzenden Installationseinrichtungen vorhanden sein müssen, keine zusätzlichen Einzelteile und somit auch keine Vormontage-Arbeiten benötigt werden.

Durch die Ausgestaltung der Erfindung nach Anspruch 2 ist nicht nur sichergestellt, daß die Hohlwanddose so weit in die Hohlwandplatte eingesetzt werden kann, daß ihr frontseitiger Rand nicht aus der Ebene der Hohlwandplatte herausragt. Außerdem erhält der axial verschiebbare Stützflansch durch den Führungsring eine bessere Führung. Während die Ansprüche 3 bis einschließlich 13 Ausgestaltungsmerkmale betreffen, die eine weitere Vereinfachung der Handhabung für die Ausführungsform mit sich bringen, bei der keine Federelemente sondern ausschließlich Befestigungsschrauben zum Verspannen des Stützflansches und der Stützelemente an der Hohlwandplatte vorgesehen sind, haben die Ausgestaltungen gemäß Anspruch 14 und 15 den Vorteil, daß sich die Hohlwanddose, wenn sie ihren Spannsitz in der Wandplatte eingenommen hat, auch dann nicht mehr lockert bzw. löst, wenn die Befestigungsschrauben nicht angezogen bzw. gelockert werden oder gar nicht vorhanden sind.

Während bei der Ausgestaltung der Erfindung nach Anspruch 3 und 4 sowie auch nach den Ansprüchen 14 und 15 der Stützflansch mit seinem Führungsring als separater Kunststoffteil gespritzt und im Zuge einer Vormontage mit der Hohlwanddose selbst in Verbindung gebracht werden muß, besteht nach der Ausgestaltung gemäß Anspruch 5 auch die Möglichkeit, den Stützflansch mit seinem Führungsring einstückig mit der Hohlwanddose selbst in einem Sprizvorgang herzustellen, so daß der Arbeitsgang der Vormontage entfallen kann.

Anhand der Zeichnung wird im folgenden die Erfindung näher erläutert. Es zeigt:

Fig. 1      eine Hohlwanddose in rückseitiger Stirnansicht;

Fig. 2      einen Schnitt II-II aus Fig. 1;

Fig. 3      einen Schnitt III-III aus Fig. 1 mit hälftig versetzter Darstellung der Hohlwanddose in bezug auf eine Wandplatte;

Fig. 4      einen Schnitt IV-IV aus Fig. 1;

Fig. 5      eine andere Hohlwanddose in rückseitiger Stirnansicht;

Fig. 6      einen Schnitt VI-VI aus Fig. 5;

Fig. 7      eine weitere Ausführungsform der Hohlwanddose in rückseitiger Stirnansicht;

Fig. 8      die Seitenansicht VIII aus Fig. 7;

Fig. 9      einen Teilschnitt IX-IX aus Fig. 7;

Fig. 10      die rückseitige Stirnansicht einer weiteren Ausführungsform der Hohlwanddose und

Fig. 11      einen Teischnitt XI-XI aus Fig. 10.

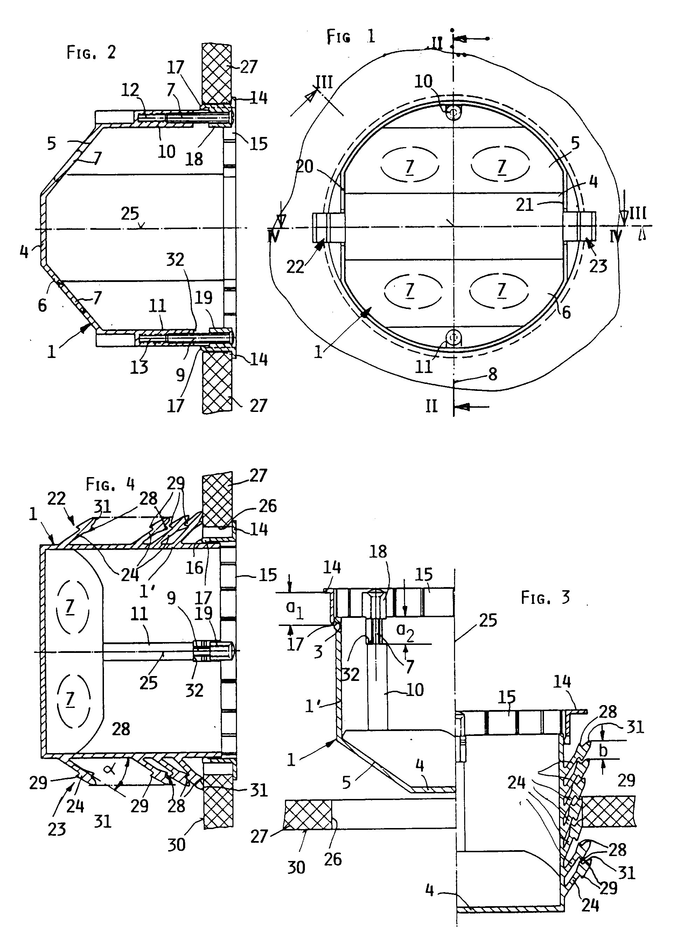

Die in den Fig. 1 bis 4 dargestellte Hohlwanddose besteht aus einem dünnwandigen, im wesentlichen hohlzylindrischen Dosenkörper 1, an dessen Außenseite in der Nähe der stirnseitigen Ringfläche 2 eine umlaufende Rastnut 3 mit einem V- oder U-förmigem Querschnitt angeordnet ist. Der Boden des Dosenkörpers 1 besteht aus einem mittleren, planebenen Bodenwandabschnitt 4, sowie aus zwei sich daran anschließenden, symmetrisch dazu angeordneten, schrägen Bodenwandabschnitten 5 und 6 mit ausbrechbaren Wanddurchbrüchen 7. Auf einer Diametralen 8, die quer zu zu den Kanten der Bodenwandabschnitte 4 bis 6 verläuft, sind innerhalb der zylindrischen Innenkontur des Dosenkörpers 1 zwei axial verlaufende rohrartige, im wesentlichen hohlzylindrische Verdickungen 10 und 11 mit axial verlaufenden Schraubenlöchern 12 und 13 einstückig angeformt, die einen genormten diametralen Abstand voneinander aufweisen und zum Einschrauben von Befestigungsschrauben 7 bzw. 9 dienen. Diese Befestigungsschrauben 7 und 9 sind bei genormten Unterputz- bzw. Hohlwanddosen regelmäßig vorhanden. Sie dienen bei herkömmlichen Hohlwand- und Unterputzdosen in bestimmten Anwendungsfällen zur Befestigung der in der Regel mit flachen Flanschringen versehenen, elektrischen Installationseinrichtungen, wie z.B. Netz-Steckdosen und Netz-Schalter od. dgl. Beim Ausführungsbeispiel der Fig. 1 bis 4 dienen diese Befestigungsschrauben zugleich oder ausschließlich zum Spannen eines reativ zum Dosenkörper 1 bzw. zur Dosenwand 1' in axialer Richtung beweglichen Stützflansches 14, der mit einem Führungsring 15 versehen und durch diesen im Bereich des offenen Randes des Dosenkörpers an der Dosenwand 1' außenseitig geführt ist. Der Führungsring 15 ist in der Nähe seiner unteren Randkante 16 mit nach innen vorspringenden Rastnocken 17 oder mit einer Rastrippe versehen, welche rastend in die Rastnut 3 des Dosenkörpers 1 eingreifen, wenn sich der Stützflansch mit seinem Führungsring in der in der linken Hälfte der Fig. 3 dargestellten montagegerechten Grundposition befindet. Der Führungsring 15 ist außerdem mit zwei deckungsgleich zu den Verdickungen 10 und 11 angeordneten, einstückig angespritzten Aufnahmeösen 18 und 19 versehen, durch welche die Befestigungsschrauben 7 bzw. 9 lose hindurchgesteckt sind und an deren außen liegenden Stirnflächen die Köpfe der Befestigungsschrauben 7 und 9 jeweils versenkt anliegen.

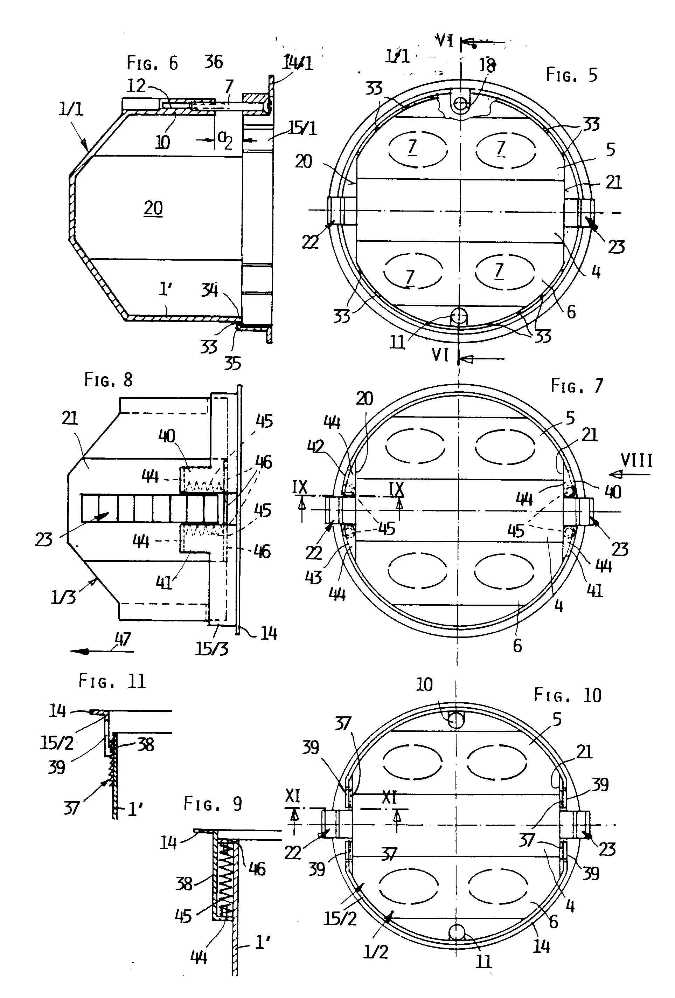

Wie am besten aus Fig. 1 ersichtlich ist, weist der Dosenkörper 1 zwei sich diametral gegenüberliegende, parallel zueinander verlaufende segmentartig abgeflachte Wandabschnitte 20 und 21 auf, die parallel zu der Diametralen 8 verlaufen, in deren Ebene die Verdickungen 10 und 11 angeordnet sind. An diesen abgeflachten Wandabschnitten 20 und 21 sind jeweils mittig Stützelemente in Form von Sperrgliedern 22 und 23 angeformt, welche jeweils aus flachen Stützzungen 24 bestehen. Diese sind in gleichen Abständen voneinander unter einem Winkel α von ca. 30° spitzwinklig schräg zur Dosenwand 1' bzw. zur Dosenachse 25 nach außen gerichtet sind. Diese Stützzungen 24 sind jeweils radial elastisch und in geringen Abständen voneinander lamellenartig in axialen Reihen angeordnet, die sich zumindest annähernd über die gesamte axiale Dosenwandlänge erstrecken. Sie lassen sich durch zylindrische Montageöffnungen 26 einer Hohlwandplatte 27, deren Durchmesser kleiner ist als der Durchmesser des Stützflansches 14, unter radial einwärts gerichteter Auslenkung hineinschieben. Nach dem Passieren der Montageöffnung kehren sie wieder in ihre ursprüngliche Lage zurück, um auf der Rückseite 30 der Hohlwandplatte 27 am Rand der Montageöffnung 26 zur Anlage zu kommen, wie es in Fig. 4 dargestellt ist.

Wie ebenfalls aus den Fig. 3 und 4 ersichtlich ist, sind die Stützzungen 24 an ihren verdickten Endabschnitten jeweils mit einander zugekehrten Sperrzähnen 28 und 29 versehen, die jeweils paarweise miteinander in Eingriff gelangen, wenn die an der Rückseite 30 der Hohlwandplatte 27 anliegende Stützzunge 24 unter der durch das Anziehen der Befestigungsschrauben 7 und 9 ausgeübten, axialen Spannkraft nach hinten ausgelenkt wird. Es ist somit sichergestellt, daß nicht nur die unmittelbar an der Rückseite 30 der Hohlwandplatte 27 anliegende Sperrzunge 24 die Spannkraft alleine aufzunehmen hat, sondern daß ein Teil dieser Spannkraft auch auf die zweite bzw. dritte Stützzunge 24 übertragen werden kann. Auf diese Weise wird eine erhöhte Befestigungsstabilität erzielt. Zugleich wird verhindert, daß sich die einzeilnen Stützzungen 24, die gerade an der Rückseite 30 der Hohlwandplatte 27 anliegen, nach hinten umkippen oder abknicken, wenn die Spannkraft größer ist als eine einzelne Stützzunge 24 unbeschadet aufnehmen kann. Damit sich die an der Rückseite 30 der Hohlwandplatte 27, die sowohl aus einem Holzbrett, wie auch aus einer Gipsplatte oder aus einer beliebigen anderen Platte bestehen kann, nicht zu scharfkantig abstützt, sind die dem Stützflansch 14 bzw. der Rückseite 30 der Hohlwandplatte 27 zugekehrten Endabschnitte jeweils mit einer Stützflächen 31 versehen.

Die axiale Länge $a_1$ des Führungsringes 15, an dem der Stützflansch 14 einstückig angeformt ist, und dessen axiale Verschiebbarkeit auf dem Dosenkörper 1 sind so gewählt, daß sie in jedem Fall größer sind, als der axiale Abstand $b$ der Stützflächen 31 zweier unmittelbar benachbarter Stützzungen 24. Aus diesem Grunde sind auch die Verdickungen 10 und 11 so geformt, daß ihre dem offenen Rand des Dosenkörpers 1 zugekehrten Stirnflächen 32 von der Stirnfläche 2 des Dosenkörpers 1 bzw. von den Aufnahmeösen 18 und 19 jeweils einen axialen Abstand $a_2$ haben, der ebenfalls größer ist als der axiale Abstand $b$ der Stützflächen 31 zweier unmittelbar benachbarter Stützzungen 24.

Die praktische Anwendung einer solchen Hohlwanddose erfolgt auf folgende Weise:
Die Hohlwanddose wird dem Installateur in vormontiertem Zustand angeliefert, in welchem die Rastnocken 17 des Führungsringes 15 in der Rastnut 3 des Dosenkörpers 1 sitzen und die Befestigungsschrauben 7 und 9 durch die Aufnahmeösen 18 und 19 hindurch in die Schraubenlöcher 12 und 13 bereits lose eingeschraubt sind. In diesem Zustand wird die Hohlwanddose, wie es in der rechten Hälfte der Fig. 3 angedeutet ist, in eine bereits vorbereitete zylindrische Montageöffnung 26 einer Hohlwandplatte 27 hineingeschoben, bis der Stützflansch 14 an der Frontseite der Hohlwandplatte 27 anliegt. Je nach der Dicke der Hohlwandplatte 27 sind beim Einführen der Hohlwanddose mehr oder weniger der Stützzungen 24 durch die Montageöffnung 26 hindurchgeschoben worden und wieder in ihre ursprüngliche Radiallage zurückgekehrt. Durch entsprechendes Anziehen der Befestigungsschrauben 7 und 9 wird dann dafür gesorgt, daß die beiden Stützzungen 24, welche die Montageöffnung 26 zuletzt verlassen haben und in ihre radiale Ausgangslage zurückgekehrt sind, gegen die Rückseite 30 der Hohlwandplatte 27 gezogen werden und sich an dieser abstützen. Wenn das Anziehen der Befestigungsschrauben 7 und 9 in einem solchen Ausmaß erfolgt, daß dabei eine radiale und zugleich axiale Auslenkung oder Verformung der sich an der Rückseite 30 abstützenden Stützzungen 24 ergibt, so werden deren Sperrzähne 29 mit den unmittelbar dahinterliegenden Sperrzähnen 28 der nächsten Stützzungen 24 in Eingriff gelangen, so daß ein Teil der axialen Spannkraft, die auf die an der Hohlwandplatte anliegenden Stützzungen 24 ausgeübt wird, auch auf die dahinterliegenden Stützzungen 24 übertragen wird.

Es ist darauf hinzuweisen, daß bei genormten Unterputzdosen und Hohlwanddosen die Befestigungsschrauben 7 und 9 und ebenso die Verdickkungen 10 und 11 ohnehin vorhanden sein müssen, so daß es sich anbietet, diese zugleich zum Verspannen der Hohlwanddose an der Hohlwandplatte 27 zu verwenden. Die durch die Rastnut 3 und die Rastnocken 17 zwischen dem Dosenkörper 1 und dem Führungsring 15 bzw. dem Stützflansch 14 gegebene lösbare Rastverbindung ist es möglich, daß beim Anziehen der Befestigungsschrauben 7 und 9 eine axiale Relativverschiebung zwischen dem Dosenkörper 1 einerseits und dem Führungsring 15 mit dem Stützflansch 14 andererseits ohne weiteres stattfinden kann. Diese Rastverbindung dient nur zur Erleichterung der Vormontage, in dem sie zu erkennen gibt, wie tief die Befestigungsschrauben 7 und 9 bei der Vormontage in die Schraubenlöcher 12 und 13 eingeschraubt werden können, damit beim Verspannen der Hohlwanddose an der Hohlwandplatte 27 in der vorstehend beschriebenen Weise der maximale Verstellhub des Führungsringes 15 mit seinem Stützflansch 14 zur Verfügung steht.

Ob die in die Rastnut 3 eingreifenden Rastnocken 17 des Führungsringes 15 an frei geschnittenen Zungen angeordnet oder am ringsum geschlossenen Führungsring 15 angeformt sind, hängt von der Materialbeschaffenheit des Führungsringes 15 ab.

Während beim vorstehend beschriebenen Ausführungsbeispiel, wie bereits erwähnt, der Stützflansch 14 mit seinem Führungsring 15 als separates Fertigungsteil hergestellt ist, zeigen die Fig. 5 und 6 eine Ausführungsform der erfindungsgemäßen Hohlwanddose, bei der der Dosenkörper 1/1 und der Stützflansch 14/1 mit seinem Führungsring 15/1 in einem einzigen Spritzvorgang einstückig miteinander hergestellt werden und durch dünne, abreißbare Verbindungsstege 33, welche den frontseitigen Rand 34 des Dosenkörpers 1/1 mit dem vom Stützflansch 14/1 abgewandten Rand 35 des Führungsringes 15/1 im Bereich der zylindrischen Wandabschnitte des Dosenkörpers 1/1 verbinden. Diese Ausführungsform hat den Vorteil, daß keine Vormontage zwischen dem Führungsring 15/1 und dem Dosenkörper 1/1 erforderlich ist. Lediglich die Befestigungsschrauben 7 und 9 müssen in der gleichen Weise wie beim Ausführungsbeispiel der Fig. 1 bis 4 in die Bohrlöcher 12 bzw. 13 der Verdickungen 10 und 11 durch die Aufnahmeösen 18 bzw. 19 hindurch lose eingeschraubt werden.

Beim Verspannen der Hohlwanddose an einer Hohlwandplatte 27 werden durch das Anziehen der Befestigungsschrauben 7 und 9 statt der Rastverbindung 3/17 die dünnen Verbindungsstege durch Abreißen gelöst. Im übrigen erfolgt die Befestigung in gleicher Weise wie beim Ausführungsbeispiel der Fig. 1 bis 4.

Um zwischen den Aufnahmeösen 18 und 19 einerseits und den Verdickungen 10 andererseits den für eine Axialverschiebung des Führungsringes 15/1 gegenüber dem Dosenkörper 1/1 erforderlichen Abstand $a_2$ zu erhalten, muß im Spritzgußwerkzeug ein entsprechender, in der Zeichnung nicht dargestellter Radialschieber vorgesehen sein, durch welchen an den Stellen der Verdickungen 10 und 11 des Dosenkörpers 1/1, wie die Fig. 6 zeigt, Öffnungen 36 in der Dosenwand 1′ verbleiben.

Beim Ausführungsbeispiel der Fig. 10 und 11 sind die abgeflachten Dosenwandabschnitte 20 und 21 jeweils beidseitig der Sperrglieder 22 und 23 mit Sperrverzahnungen 37 versehen, die sich jeweils über eine dem Spannhub des mit dem Stützflansch 14 versehenen Führungsringes 14/2 entsprechende axiale Länge erstrecken. Mit diesen Verzahnungen 37 stehen jeweils Sperrzähne 38 von Sperrzungen 39 in Eingriff, die einstückig am Führungsring 14/2 des Stützflansches 14 angeformt sind und parallel zu den abgeflachten Wandabschnitten 20 und 21 verlaufen.

Mit Hilfe dieser Sperrverzahnungen 37 und Sperrzungen 39 kann sichergestellt werden, daß dann, wenn die Befestigungsschrauben 7 und 9 zum Zwecke des Einbaues eines Schalters, einer Steckdose od. dgl. vorübergehend gelöst werden müssen, die Hohlwanddose ihren Sitz in der Montageöffnung 26 der Hohlwandplatte 27 nicht verliert, wie das bei der Ausführungsform der Fig. 1 bis 4 der Fall sein kann. Durch den Zahneingriff zwischen den Sperrzähne 38 der Sperrzungen 39 und den Sperrverzahnungen 37 sowie durch die axiale Elastizität der Stützzungen 24 wird der Stützflansch 14 in seiner Spannposition auch bei gelösten Befestigungsschrauben 7,9 gehalten.

Statt der Sperrverzahnungen 37 und der Sperrzähne 38, die ein axiales Verschieben des Stützflansches 14 bzw. des Führungsringes 14/2 nur in Spannrichtung gegen die Sperrglieder 22 und 23 zulassen, können auch Rastverzahnungen und Rastzähne vorgesehen sein.

Beim Ausführungsbeispiel der Fig. 10 und 11 ist der Stützflansch 14 mit seinem Führungsring 14/2 wie beim Ausführungsbeispiel der Fig. 1 bis 4 als separates Teil hergestellt und nachträglich durch Vormontage auf den Dosenkörper 1/2 so aufgesetzt, daß die Sperrzähne 38 seiner Sperrzungen 39 mit den randnächsten Zähnen der Sperrverzahnunge 37 in Eingriff stehen und noch den maximalen Spannhub zulassen.

Die Fig. 7 und 8 zeigen ein weiteres Ausführungsbeispiel der erfindungsgemäßen Hohlwanddose, bei dem der axial beweglich am offenen Endabschnitt des Dosenkörpers 1/3 angeordnete Stützflansch 14 an seinem Führungsring 15/3 in den jeweils beidseitig der Sperrglieder 22 und 23 liegenden Abschnitten an Verlängerungszungen 40 und 41 bzw. 42 und 43 Stützschultern 44 aufweist, an denen sich Schraubendruckfedern 45 abstützen, die ihre Gegenlager an Stützschultern 46 haben, welche am offenen Rand des Dosenkörpers 1/3 im Bereich der abgeflachten Dosenwandabschnitte 20 und 21 innerhalb des Führungsringes 15/3 radial nach außen stehend angeformt sind. Durch diese Schraubendruckfedern 45 wird der Führungsring 15/3 mit seinem Stützflansch 14 auf dem Dosenkörper 1/3 jeweils in Richtung des Pfeiles 47 gegen die Sperrglieder 22 bzw. 23 geschoben bis die Aufnahmeösen 18 und 19 auf den die Schraubenlöcher 12 und 13 enthaltenden Verdickungen 10 und 11 aufsitzen. In diesem Falle werden die Befestigungsschrauben 7 und 9, auch wenn sie vorhanden sind, nicht unbedingt zum erspannen der Hohlwanddose an der Hohlwandplatte 27 benötigt, falls die Schraubendruckfedern 45 stark genug sind, die erforderliche Spannkraft aufzubringen.

Das Einsetzen und Befestigen der in den Fig. 7 und 8 dargestellten Hohlwanddose erfolgt in sehr einfacher Weise dadurch, daß der Dosenkörper 1/3 in die vorgesehene Montageöffnung 26 so weit eingeschoben wird, bis der Stützflansch 14 an der Außenseite der Hohlwandplatte 27 anliegt. Dann ist es noch erforderlich, den Dosenkörper 1/3 noch um so viel tiefer in die Montageöffnung 26 hineinzudrücken, daß die jeweils nächste Sperrzunge 24, die beim Auftreffen des Stützflansches 14 an der Hohlwandplatte 27 gerade noch in die Motageöffnung 26 hineinragt, frei wird und die Hohlwandplatte 27 von hinten hintergreifen kann. Wenn dann der Dosenkörper 1/3 wieder losgelassen wird, erzeugen die Schraubendruckfedern 45 den Spannsitz, in dem sie den Dosenkörper 1/3 und somit die an der Rückseite der Hohlwandplatte 27 anliegenden Sperrzungen 24 in Richtung des Stützflansches 14 ziehen.

Während bei den vorstehend beschriebenen Ausführungsbeispielen die die Befestigungsschrauben 7 und 9 aufnehmenden Verdickungen 10 und 11 zu den Sperrgliedern 22 und 23 jeweils um 90° versetzt angeordnet sind, und dadurch die von den Befestigungsschrauben 7 und 9 auf den Stützflansch 14 ausgeübten Spannkräften relativ weit entfernt von den Sperrgliedern 22 und 23 wirksam sind, kann es vorteilhaft sein, die Sperrglieder 22 und 23 in unmittelbarer Nähe der Verdickungen 10 und 11 bzw. der Befestigungsschrauben 7 und 9 anzuordnen, damit die Spannkräfte und Stützkräfte in unmittelbarer Nähe zueinander wirksam werden. Dadurch können Bruchgefahr und Verwindungen bzw. Verformungen am Führungsring 15, 15/1, 15/2, 15/3 bzw. am Stützflansch 14 besser vermieden werden.

Beim Ausführungsbeispiel der Fig. 7 und 8 können statt der als separate Fertigungsteile einzusetzenden Schraubendruckfedern 45 auch einstückig am Dosenkörper 1/3 oder am Führungsring 15/3 angeformte Federelemente vorgesehen sein.

**Patentansprüche**

1. Hohlwanddose aus Kunststoff für elektrische Installationseinrichtungen, insbesondere für Schalter, Steckdosen od. dgl., welche an der offenen Seite ihrer im wesentlichen zylindrischen Dosenwand (1') einen Stützflansch (14) und an deren Außenseite gegen den Stützflansch gerichtete Stützelemente aufweist und bei der der Dosenkörper (1) mit wenigstens zwei Befestigungsschrauben (7, 9) versehen ist, welche von der offenen Dosenseite her in achsparallele Schraubenlöcher (12, 13) von achsparallel verlaufenden Verdickungen (10, 11) der Dosenwand (1') eingeschraubt sind, **dadurch gekennzeichnet,** daß die Stützelemente aus jeweils mehreren, in axialen Reihen lamellenartig angeordneten, radial elastischen Sperrgliedern (22, 23) bestehen und daß der Stützflansch (14) axial beweglich am Dosenkörper (1, 1/1, 1/2, 1/3) angeordnet und durch die Befestigungsschrauben (7, 9) und/oder durch Federelemente (43) in axialer Richtung gegen die Stützelemente spannbar ist.

2. Hohlwanddose nach Anspruch 1, dadurch gekennzeichnet, daß der Stützflansch (14) mit einem an der Dosenwand (1') geführten Führungsring (15, 15/1, 15/2, 15/3) versehen ist.

3. Hohlwanddose nach Anspruch 2, dadurch gekennzeichnet, daß der Führungsring (15, 15/1, 15/2) durch lösbare Verbindungselemente (3, 17; 37, 38) mit dem Dosenkörper (1, 1/1, 1/2, 1/3) in einer Position verbunden ist, in welcher sein Stützflansch (14) von den Sperrgliedern (22, 23) des Dosenkörpers (1, 1/1, 1/2, 1/3) den maximalen Abstand hat.

4. Hohlwanddose nach Anspruch 3, dadurch gekennzeichnet, daß die Verbindungselemente aus einer ringartig verlaufenden Rastnut (3) und rastend in diese eingreifenden Rastnocken (17) bestehen.

5. Hohlwanddose nach Anspruch 3, dadurch gekennzeichnet, daß die Verbindungselemente aus dünnen, abreißbaren, die Dosenwand (1') und den Führungsring (15/1) einstückig miteinander verbindenden Verbindungsstegen (33) bestehen.

**6.** Hohlwanddose nach einem der Ansprüche 1 bis 5, dadurch gekennzeichnet, daß der Stützflansch (14, 14/1, 14/2) bzw. dessen Führungsring (15, 15/1, 15/2) mit zwei sich diametral gegenüberliegenden radial nach innen vorstehenden Aufnahmeösen (18, 19) für die Befestigungsschrauben (7, 9) versehen ist und daß die mit den Schraubenlöchern (12, 13) versehenen Verdickungen (10, 11) in einem dem maximalen Verstellhub des Stützflansches entsprechenden Abstand von der offenen Stirnseite des Dosenkörpers (1, 1/1, 1/2) enden.

**7.** Hohlwanddose nach Anspruch 1 oder 6, dadurch gekennzeichnet, daß die die Befestigungsschrauben (7, 9) aufnehmenden, innerhalb der Dosenwand (1') liegenden Verdickungen (10, 11) und die auf der Dosenwandaußenseite angeordneten Stützelemente (22, 23) in Umfangsrichtung nahe beieinander angeordnet sind.

**8.** Hohlwanddose nach einem der Ansprüche 1 bis 7, dadurch gekennzeichnet, daß die Befestigungsschrauben (7, 9) auch zum Befestigen der einzusetzenden Installationseinrichtungen z.B. der elektrischen Steckdose, des elektrischen Schalters od. dgl. bentuzt werden.

**9.** Hohlwanddose nach Anspruch 1, dadurch gekennzeichnet, daß die die Stützelemente bildenden Sperrglieder (22, 23) an segmentartig abgeflachten Abschnitten (20, 21) der Dosenwand angeordnet sind.

**10.** Hohlwanddose nach Anspruch 1 oder 9, dadurch gekennzeichnet, daß die Spergglieder (22, 23) jeweils aus unter einem Winkel ( $\alpha$ ) von weniger als 35° spitzwinklig schräg zu Dosenwand (1') nach außen gerichteten, flachen Stützzungen (24) mit quer zur Dosenachse (25) verlaufenden Stützkanten oder Stützflächen (31) bestehen.

**11.** Hohlwanddose nach Anspruch 10, dadurch gekennzeichnet, daß die Stützzungen (24) an ihren Endabschnitten mit einander zugekehrten Sperrzähnen (28, 29) versehen sind, die bei einer Belastung und Auslenkung der Stützzungen (24) jeweils gegenseitig miteinander in Eingriff gelangen.

**12.** Hohlwanddose nach einem der Ansprüche 1 bis 11, dadurch gekennzeichnet, daß der Stützflansch (14) oder dessen Führungsring (15/2) einerseits und der Dosenkörper (1/2) andererseits mit form- und/oder kraftschlüssig miteinander in Eingriff stehenden, einerseits aus mehreren Sperr- oder Rastzähnen (37) und andererseits aus wenigstens einem Gegensperr-oder Gegenrastzahn (38) bestehenden Verbindungselementen versehen sind, durch welche der Stützflansch in unterschiedlichen Axialpositionen am Dosenkörper (1/2) fixierbar ist.

**13.** Hohlwanddose nach Anspruch 12, dadurch gekennzeichnet, daß die Verbindungselemente am Umfang des Dosenkörpers (1, 1/1, 1/2) beiderseits der lamellenartigen Sperrglieder (22, 23) angeordnet sind.

**14.** Hohlwanddose nach einem der Ansprüche 1 bis 13, dadurch gekennzeichnet, daß zwischen dem Dosenkörper (1/2) einerseits und dem Stützflansch (14) andererseits in axialer Richtung wirksame Federn (45) angeordnet sind, welche den Stützflansch (14) gegen Sperrglieder (22, 23) belasten.

**15.** Hohlwanddose nach Anspurch 14, dadurch gekennzeichnet, daß die Federn in Form von Schraubenfedern (45) zwischen Stützschultern (46) des Dosenkörpers (1/3) und Stützschultern (44) des Führungsringes (15/3) des Stützflansches (14) angeordnet sind.

## Claims

**1.** Cavity wall socket consisting of plastics material for electrical installation devices, in particular for switches, plug sockets or the like, which on the open side of its substantially cylindrical socket wall (1') comprises a support flange (14) and on its outer side support members directed towards the support flange and in which the socket body (1) is provided with at least two fixing screws (7, 9), which are screwed from the open socket side into axis parallel screw holes (12, 13) of thickened portions (10, 11) of the socket wall (1') extending in an axis parallel manner, characterised in that the support members respectively consist of a plurality of radially resilient locking members (22, 23) arranged in a laminated manner in axial rows and that the support flange (14) is arranged to move axially on the socket body (1, 1/1, 1/2, 1/3) and can be tightened in the axial direction against the support members by the fixing screws (7, 9) and/or by spring members (43).

**2.** Cavity wall socket according to Claim 1, characterised in that the support flange (14) is provided with a guide ring (15, 15/1, 15/2, 15/3) guided on the socket wall (1').

3. Cavity wall socket according to Claim 2, characterised in that the guide ring (15, 15/1, 15/2) is connected by releasable connecting members (3, 17; 37, 38) to the socket body (1, 1/1, 1/2, 1/3) in a position in which its support flange (14) is at the maximum distance from the locking members (22, 23) of the socket body (1, 1/1, 1/2, 1/3).

4. Cavity wall socket according to Claim 3, characterised in that the connecting members consist of a locking groove (3) extending in the shape of a ring and locking lugs (17) engaging therein in a locking manner.

5. Cavity wall socket according to Claim 3, characterised in that the connecting members consist of thin connecting webs (33) which can be torn off and connect the socket wall (1') and the guide ring (15/1) together in one piece.

6. Cavity wall socket according to one of Claims 1 to 5, characterised in that the support flange (14, 14/1, 14/2) or its guide ring (15, 15/1, 15/2) is provided with two receiving eyes (18, 19), which lie diametrically opposite each other and project radially inwards, for the fixing screws (7, 9) and that the thickened portions (10, 11) provided with the screw holes (12, 13) terminate at a distance from the open end face of the socket body (1, 1/1, 1/2) corresponding to the maximum adjusting stroke of the support flange.

7. Cavity wall socket according to Claim 1 or 6, characterised in that the thickened portions (10, 11) receiving the fixing screws (7, 9) and lying inside the socket wall (1') and the support members (22, 23) located on the outside of the socket wall are arranged close beside each other in the peripheral direction.

8. Cavity wall socket according to one of Claims 1 to 7, characterised in that the fixing screws (7, 9) are also used for fixing the installation devices to be inserted, for example of the electrical plug socket, of the electrical switch or the like.

9. Cavity wall socket according to Claim 1, characterised in that the locking members (22, 23) forming the support members are disposed on sections (20, 21) of the socket wall flattened in the form of segments.

10. Cavity wall socket according to Claim 1 or 9, characterised in that the locking members (22, 23) respectively consist of flat support tongues (24) directed outwards at an angle (α) of less than 35° at an acute angle obliquely to the socket wall (1'), with support edges or support surfaces (31) extending transversely with respect to the axis of the socket (25).

11. Cavity wall socket according to Claim 10, characterised in that the support tongues (24) are provided on their end sections with locking teeth (28, 29) facing each other, which at the time of a load and deflection of the support tongues (24) come respectively into mutual engagement with each other.

12. Cavity wall socket according to one of Claims 1 to 11, characterised in that the support flange (14) or its guide ring (15/2) on the one hand and the socket body (1/2) on the other hand are provided with connecting members in form-locking and/or frictional engagement one with the other and consisting on the one hand of a plurality of locking or engaging teeth (37) and on the other hand of at least one counter-locking or counter-engaging tooth (38), by which connecting members the support flange may be fixed in different axial positions on the socket body (1/2).

13. Cavity wall socket according to Claim 12, characterised in that the connecting members are disposed on the periphery of the socket body (1, 1/1, 1/2) on both sides of the laminated locking members (22, 23).

14. Cavity wall socket according to one of Claims 1 to 13, characterised in that disposed between the socket body (1/2) on one side and the support flange (14) on the other side are springs (45) acting in the axial direction, which load the support flange (14) towards the locking members (22, 23).

15. Cavity wall socket according to Claim 14, characterised in that the springs in the form of helical springs (45) are disposed between support shoulders (46) of the socket body (1/3) and support shoulders (44) of the guide ring (15/3) of the support flange (14).

**Revendications**

1. Boîte d'installation électrique en matière plastique pour parois creuses, en particulier pour des interrupteurs, des prises de courant ou analogues, qui comprend sur le côté ouvert de sa paroi de boîte (1') sensiblement cylindrique une bride de support (14) et, sur sa face extérieure, des éléments de support dirigés vers la bride de support et dont le corps de boîte (1) est muni d'au moins deux vis de fixation (7, 9) lesquelles sont vissées à partir du côté ouvert de la boîte dans des trous de vis (12, 13) parallèles à l'axe ménagés dans des épaississements (10, 11) de la paroi (1') de la boîte qui s'étendent parallèlement à l'axe, **caractérisée en ce** que les éléments de support sont respectivement constitués de plusieurs organes d'arrêt (22, 23) radialement élastiques disposés à la manière de lamelles en rangées axiales, et que la bride de support (14) axialement mobile est disposée de manière axialement mobile sur le corps de boîte (1, 1/1, 1/2, 1/3) et peut être bloquée axialement contre les éléments de support au moyen des vis de fixation (7, 9) et/ou à l'aide d'éléments élastiques (43).

2. Boîte d'installation pour parois creuses selon la revendication 1, caractérisée en ce que la bride de support (14) est munie d'une bague de guidage (15, 15/1, 15/2, 15/3) guidée sur la paroi (1') de la boîte.

3. Boîte d'installation pour parois creuses selon la revendication 2, caractérisée en ce que la bague de guidage (15, 15/1, 15/2) est reliée par des éléments de liaison (3, 17; 37, 38) au corps de boîte (1, 1/1, 1/2, 1/3) dans une position dans laquelle sa bride de support (14) se trouve à la distance maximale des organes d'arrêt (22, 23) du corps de boîte (1, 1/1, 1/2, 1/3).

4. Boîte d'installation pour parois creuses selon la revendication 3, caractérisée en ce que les éléments de liaison sont constitués par une encoche d'arrêt (3) annulaire et par des ergots d'arrêt (17) qui s'enclenchent dans celleci.

5. Boîte d'installation pour parois creuses selon la revendication 3, caractérisée en ce que les éléments de liaison sont constitués par de minces barrettes de liaison (33) arrachables qui relient en une seule pièce la paroi (1') de la boîte et la bague de guidage (15/1).

6. Boite d'installation pour parois creuses selon l'une des revendications 1 à 5, caractérisée en ce que la bride de support (14, 14/1, 14/2) et respectivement sa bague de guidage (15, 15/1, 15/2) est munie de deux oeillets de réception (18, 19) diamétralement opposés et dépassant vers l'intérieur pour les vis de fixation (7, 9), et que les épaississements (10, 11) munis des trous de vis (12, 13) se terminent à une distance de la face frontale ouverte du corps de boîte (1, 1/1, 1/2) qui correspond à la course d'ajustement maximale de la bride de support.

7. Boîte d'installation pour parois creuses selon l'une des revendications 1 ou 6, caractérisée en ce que les épaississements (10, 11) recevant les vis de fixation (7, 9) et situés à l'intérieur de la paroi (1') de la boîte et les éléments de support (22, 23) disposés à la face extérieure de la paroi de la boîte sont placés à proximité les uns des autres dans la direction circonférentielle.

8. Boîte d'installation pour parois creuses selon l'une des revendications 1 à 7, caractérisée en ce que les vis de fixation (7, 9) sont également utilisées pour la fixation des dispositifs d'installation à insérer, par exemple de la prise de courant électrique, de l'interrupteur électrique ou analogues.

9. Boîte d'installation pour parois creuses selon la revendication 1, caractérisée en ce que les organes d'arrêt (22, 23) qui forment les éléments de support sont disposés sur des sections (20, 21) de la paroi de la boîte aplaties à la manière de segments.

10. Boîte d'installation pour parois creuses selon l'une des revendications 1 ou 9, caractérisée en ce que les organes d'arrêt (22, 23) sont respectivement constitués par des languettes d'appui (24) plates dirigées en oblique vers l'extérieur sous un angle ($\alpha$) aigu de moins de 35° par rapport à la paroi (1') de la boîte, avec des arêtes ou surfaces d'appui (31) qui s'étendent perpendiculairement à l'axe (25) de la boîte.

11. Boîte d'installation pour parois creuses selon la revendication 10, caractérisée en ce que les languettes d'appui (24) comportent sur leurs sections terminales des dents d'arrêt (28, 29) dirigées les unes vers les autres et respectivement mises en prise les unes avec les autres sous l'effet d'une sollicitation et déviation desdites languettes d'appui (24).

12. Boîte d'installation pour parois creuses selon l'une des revendications 1 à 11, caractérisée en ce que la bride de support (14) ou sa bague de guidage (15/2) d'une part et le corps de boîte (1/2) d'autre part sont munis d'éléments de liaison coopérant à engagement positif et/ou par adhérence et constitués d'une part de plusieurs dents d'arrêt ou d'encliquetage (37) et, d'autre part, d'au moins une dent d'arrêt ou d'encliquetage (38) conjuguée, par lesquels la bride de support peut être fixée dans différentes positions axiales sur le corps de boîte (1/2).

13. Boîte d'installation pour parois creuses selon la revendication 12, caractérisée en ce que les éléments de liaison sont disposés sur la périphérie du corps de boîte (1, 1/1, 1/2), de part et d'autre des organes d'arrêt (22, 23) en forme de lamelles.

14. Boîte d'installation pour parois creuses selon l'une des revendications 1 à 13, caractérisée en ce qu'entre le corps de boîte (1/2) d'une part et la bride de support (14) d'autre part, sont disposés des ressorts (45) agissant dans le sens axial et poussant la bride de support (14) contre des organes d'arrêt (22, 23).

15. Boîte d'installation pour parois creuses selon la revendication 14, caractérisée en ce que les ressorts sous forme de ressorts cylindriques (45) sont disposés entre des épaulements d'appui (46) du corps de boîte (1/3) et des épaulements d'appui (44) de la bague de guidage (15/3) de la bride de support (14).

Fig. 2

Fig. 1

Fig. 4

Fig. 3

Fig. 6

Fig. 5

Fig. 8

Fig. 7

Fig. 11

Fig. 9

Fig. 10